# EUROPEAN PATENT APPLICATION

(11) **EP 3 043 262 A1**
(43) Date of publication of application: **13.07.2016**
(21) Application number: 14800542.4
(22) Date of filing: 09.06.2014
(51) Int. Cl.: G06F 9/445

(54) **METHOD AND DEVICE FOR REMOTE BASE STATION VERSION INSTALLATION**

(30) Priority: 05.09.2013 CN 201310399112
(71) Applicant: ZTE Corporation, Shenzhen, Guangdong 518057 (CN)
(72) Inventor: JING, Haitao, Shenzhen, Guangdong Province 518057 (CN); LI, Guiping, Shenzhen, Guangdong Province 518057 (CN)
(74) Representative: Novagraaf Technologies
(86) International application number: PCT/CN2014/079523
(87) International publication number: WO 2014/187401

(57) **Abstract**

Provided are a method and a device for remote base station version installation, relating to the technical field of communications. According to the method, a Central Processing Unit (CPU) of a base station activates a CPU minimal system and a related peripheral port by loading a boot loader; the CPU downloads a latest base station version from a remote version storage server connected to the related peripheral port activated; the CPU loads the latest base station version downloaded and backs up the latest base station version downloaded to a system flash memory upon successful loading. The technical solution can complete version upgrade and backup automatically without manual intervention, facilitate fully automated production test at the manufactures and remote automatic upgrade of field maintenance, and greatly reduce equipment production and maintenance costs.

## Description

### Technical Field

The present disclosure relates to the technical field of communications, and in particular to a method and a device for remote base station version installation.

### Background

Currently, Central Processing Unit (CPU) boot programs for communications mostly are stored in a special boot flash outside a CPU chip, or share one large-capacity flash with system programs. The above technical solution has various defects which are described in detail as follows.
1. During the production test of base station equipment, it is needed to perform data burn on the flash, which is used for storing CPU boot programs, in an equipment board before performing surface mount, and it is also needed to update system programs before the production test. The above two factors will lead to burn cost in batch production; most of all, the high burn cost and the human cost caused by many times of program download and update have become an important part of the production cost.
2. During field usage, whenever it is needed to update the bottom driver of the equipment board and chip boot programs, support professionals need to open covers onsite to conduct the corresponding operations. This causes the increase in maintenance cost of equipment factories and meanwhile impacts user experience.
3. The separation of boot programs of the bottom chip of the system from system programs increases the workload and difficulty of maintenance and management.

In view of the above situations, it is very important to design a method and a device for communication equipment to implement equipment start upon a remote download of a version and to reduce version management cost by remote automatic download and installation of a version during production test and field usage.

Therefore, the embodiments of the present disclosure provide a method and a device for managing base station system version by adopting a remote download and installation technology of base station system version.

### Summary

The embodiments of the present disclosure provide a method and a device for remote base station version installation, to solve the problem in related art of high version management cost caused by multiple times of operations and maintenances because of unintegrated version.

According to one aspect of the embodiments of the present disclosure, a method for remote base station version installation is provided, including:
activating, by a CPU of a base station, a CPU minimal system and a related peripheral port by loading a boot loader;
downloading, by the CPU, a latest base station version from a remote version storage server connected to the related peripheral port activated;
loading, by the CPU, the latest base station version downloaded and backing up, by the CPU, the latest base station version downloaded to a system flash memory upon successful loading.

In an example embodiment, the method may further include:
transmitting the latest base station version successfully loaded to a base station subjected to production test or a base station subjected to field upgrade;
downloading the latest base station version in the base station subjected to production test or the base station subjected to field upgrade, and marking information of the latest base station version downloaded as information of a main base station version.

In an example embodiment, the method may further include:
during the production test of a base station version or the field upgrade of the base station version, querying version information from the remote version storage server and acquiring information of the latest base station version;
comparing the acquired information of the latest base station version with information of a local base station version;
when the information of the local base station version is different from the acquired information of the latest base station version, downloading the latest base station version and marking the information of the downloaded latest base station version as information of a main base station version, by the CPU.

In an example embodiment, activating the related peripheral port may include:
determining, by the activated CPU minimal system, a booting manner through a peripheral pin; selecting and activating, by the boot loader, the related peripheral port;
wherein the related peripheral port includes a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

In an example embodiment, downloading the latest base station version from the remote version storage server connected to the related peripheral port activated includes:
acquiring, by the CPU, the latest base station version through the connection between the related peripheral port activated and the remote version storage server;
downloading, by the CPU, the acquired latest base station version.

According to another aspect of the embodiments of the present disclosure, a device for remote base station version installation is provided, including:
an activation component, which is configured to enable a CPU of a base station to activate a CPU minimal system and a related peripheral port by loading a boot loader;
a download component, which is configured to download a latest base station version from a remote version storage server connected to the related peripheral port activated;
a load and a backup component, which is configured to enable the CPU to load the latest base station version downloaded and back up the latest base station version downloaded to a system flash memory upon successful loading.

In an example embodiment, the device may further include:
a transmitting component, which is configured to transmit the latest base station version successfully loaded to a base station subjected to production test or a base station subjected to field upgrade;
a latest base station version acquisition component, which is configured to download the latest base station version in the base station subjected to production test or the base station subjected to field upgrade, and to mark information of the latest base station version downloaded as information of a main base station version.

In an example embodiment, the device may further include:
a query component, which is configured to query version information from the remote version storage server and to acquire information of the latest base station version, during the production test of a base station version or the field upgrade of the base station version;
a comparison component, which is configured to compare the acquired information of the latest base station version with information of a local base station version;
a latest base station version acquisition component, which is configured to enable the CPU to download the latest base station version and mark the information of the downloaded latest base station version as information of a main base station version, when the information of the local base station version is different from the acquired information of the latest base station version.

In an example embodiment, the activation component is configured to activate the related peripheral port in a following manner:
determining, by the activated CPU minimal system, a booting manner through a peripheral pin; selecting and activating, by the boot loader, the related peripheral port;
wherein the related peripheral port includes a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

In an example embodiment, the download component includes:
a latest base station version information acquisition unit, which is configured to enable the CPU to acquire the latest base station version, through the connection between the related peripheral port activated and the remote version storage server;
a latest base station version information download unit, which is configured to enable the CPU to download the acquired latest base station version.

Compared with relevant art, the technical solution provided by the embodiments of the present disclosure has advantages as follows:
the technical solution can complete version upgrade and backup automatically without manual intervention, facilitate fully automated production test at the manufactures and remote automatic upgrade of field maintenance, and greatly reduce equipment production and maintenance costs.

### Brief Description of the Drawings

Fig. 1 is a diagram showing the flow of a method for remote base station version installation according to an embodiment of the present disclosure;
Fig. 2 is a diagram showing a device for remote base station version installation according to an embodiment of the present disclosure;
Fig. 3 is a diagram showing the flow that a base station downloads and installs a version remotely during a production stage according to an embodiment of the present disclosure;
Fig. 4 is a diagram showing the flow of installation of a base station version during production test and on field usage according to an embodiment of the present disclosure; and
Fig. 5 is a diagram showing the structure of a device for remote base station version download and installation according to an embodiment of the present disclosure.

### Detailed Description of the Embodiments

The example embodiments of the present disclosure are described below in conjunction with accompanying drawings. It should be understood that the example embodiment described below are only to describe and illustrate but to limit the present disclosure.

In the embodiments of the present disclosure, a CPU minimal system (minimal units needed to start the system, including CPU, RAM, Flash) and a CPU related peripheral port are activated by the internal BootLoader cured Read-Only Memory (ROM) inside the CPU chip, a version is downloaded and updated remotely through the related peripheral port for implementing the management of base station version information. In this way, the cost for installation of base station version during production test and on field usage is reduced.

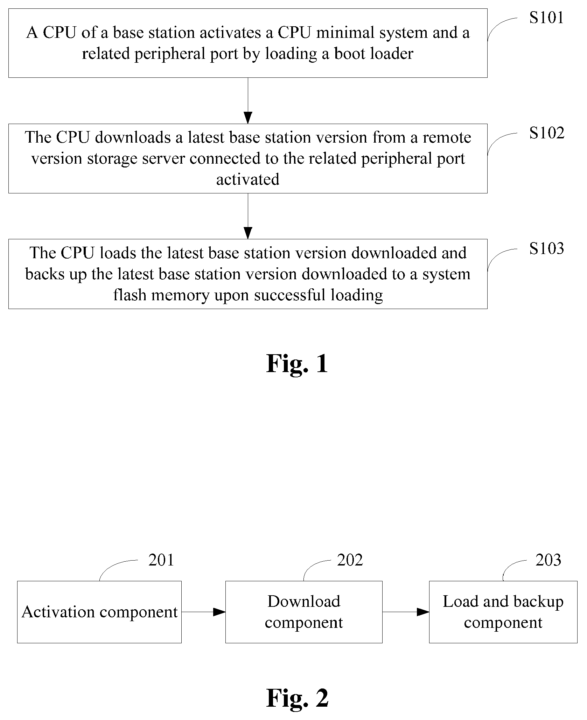

Fig. 1 is a diagram showing the flow of a method for remote base station version installation according to an embodiment of the present disclosure. As shown in Fig. 1, the method includes:
S101: a CPU of a base station activates a CPU minimal system and a related peripheral port by loading a boot loader.
S102: the CPU downloads a latest base station version from a remote version storage server connected to the related peripheral port activated.
S103: the CPU loads the latest base station version downloaded and backs up the latest base station version downloaded to a system flash memory upon successful loading.

In an example implementation of the present disclosure, the method may further include: transmitting the latest base station version successfully loaded to a base station subjected to production test or a base station subjected to field upgrade;
downloading the latest base station version in the base station subjected to production test or the base station subjected to field upgrade, and marking information of the latest base station version downloaded as information of a main base station version.

In an example implementation of the present disclosure, the method may further include: during the production test of a base station version or the field upgrade of the base station version, querying version information from the remote version storage server and acquiring information of the latest base station version;
comparing the acquired information of the latest base station version with information of a local base station version;
when the information of the local base station version is different from the acquired information of the latest base station version, downloading, by the CPU, the latest base station version and marking, by the CPU, the information of the downloaded latest base station version as information of a main base station version.

That is to say, after the latest base station version is first downloaded and the CPU minimal system loads the latest base station version successfully, version query is conducted based on a background command of the equipment according to the preset IP address of the remote version storage server; information of the latest base station version acquired from the remote version storage server is compared with information of the local base station version (file size, Sum value or others); when the information of the local base station version is different from the acquired information of the latest base station version, the CPU downloads the information of the latest base station version, marks in the non-volatile memory the base station version running currently as a backup version, and marks information of the latest base station version downloaded as information of a main base station version; after the system is restarted, the system executes information of the main base station version to complete loading; by far, the remote installation is completed.

As an example implementation, activating the related peripheral port may include: the activated CPU minimal system determines a booting manner through a peripheral pin; the boot loader selects and activates the related peripheral port; wherein the related peripheral port includes a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

As an example implementation, downloading the latest base station version from the remote version storage server connected to the related peripheral port activated may include: the CPU acquires the latest base station version through the connection between the related peripheral port activated and the remote version storage server; the CPU downloads the acquired latest base station version.

Fig. 2 is a diagram showing a device for remote base station version installation according to an embodiment of the present disclosure. As shown in Fig. 2, the device includes: an activation component 201, which is configured to enable a CPU of a base station to activate a CPU minimal system and a related peripheral port by loading a boot loader; a download component 202, which is configured to download a latest base station version from a remote version storage server connected to the related peripheral port activated; a load and a backup component 203, which is configured to enable the CPU to load the latest base station version downloaded and back up the latest base station version downloaded to a system flash memory upon successful loading.

In an example implementation of the present disclosure, the device may further include: a transmitting component, which is configured to transmit the latest base station version successfully loaded to a base station subjected to production test or a base station subjected to field upgrade; a latest base station version acquisition component, which is configured to download the latest base station version in the base station subjected to production test or the base station subjected to field upgrade, and to mark information of the latest base station version downloaded as information of a main base station version.

In an example implementation of the present disclosure, the device may further include: a query component, which is configured to query version information from the remote version storage server and to acquire information of the latest base station version, during the production test of a base station version or the field upgrade of the base station version; a comparison component, which is configured to compare the acquired information of the latest base station version with information of a local base station version; a latest base station version acquisition component, which is configured to enable the CPU to download the latest base station version and mark the information of the downloaded latest base station version as information of a main base station version, when the information of the local base station version is different from the acquired information of the latest base station version.

As an example implementation, the activation component may be configured to activate the related peripheral port in a following manner: the activated CPU minimal system determines a booting manner through a peripheral pin; the boot loader selects and activates the related peripheral port; wherein the related peripheral port includes a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

The download component 202 includes: a latest base station version information acquisition unit, which is configured to enable the CPU to acquire the latest base station version, through the connection between the related peripheral port activated and the remote version storage server; a latest base station version information download unit, which is configured to enable the CPU to download the acquired latest base station version.

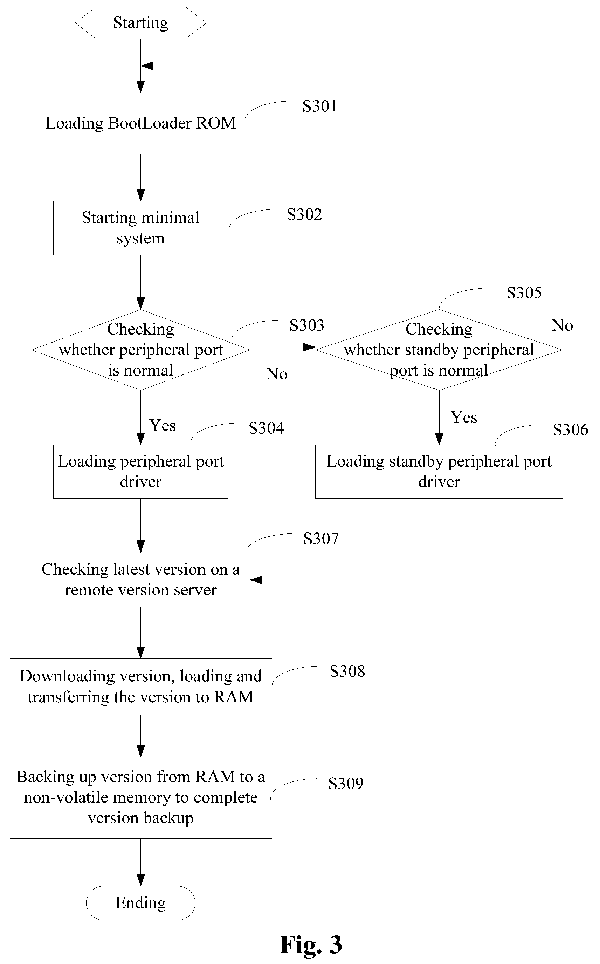

Fig. 3 is a diagram showing the flow that a base station downloads and installs a version remotely during a production stage according to an embodiment of the present disclosure. As shown in Fig. 3, the flow includes:
S301: a CPU board of a base station is electrified to load an internal BootLoader.
S302: a CPU minimal system and a related peripheral port are activated.
S303: the CPU performs workability scanning on the peripheral port to check whether a main peripheral port is normal; if the main peripheral port is normal, enter S304; otherwise, enter S305.
S304: the CPU loads a main peripheral port driver.
S305: the CPU checks whether a standby peripheral port is normal; if the standby peripheral port is normal, enter S306; otherwise, enter S301.

If the CPU, after started, finds that the main peripheral port used for acquiring the latest base station version from the remote version storage server has a fault, the CPU will load the standby peripheral port and complete version download via the standby peripheral port.

S306: the CPU minimal system loads the standby peripheral port driver.

S307: the CPU acquires the latest base station version from the remote version storage server via the peripheral port.

S308: the CPU starts downloading the latest base station version, and loads the latest base station version through BootLoader.

S309: after the latest base station version is loaded to the Random-Access Memory (RAM) successfully, the CPU establishes a version and backs up the version in a non-volatile memory according to version commands to complete the download process of the latest base station version.

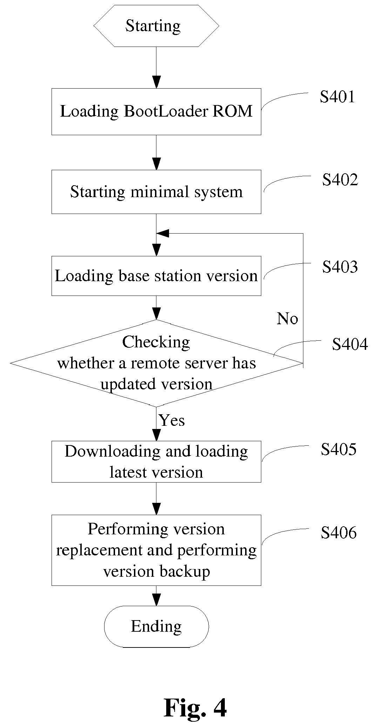

Fig. 4 is a diagram showing the flow of installation of a base station version during production test and on field usage according to an embodiment of the present disclosure. As shown in Fig. 4, the flow includes:
S401: after a base station is started, a CPU board is electrified to load a BootLoader.
S402: a CPU minimal system and a related peripheral port are activated.
S403: when the latest base station version is installed in the equipment connected to the peripheral port, the CPU acquires the latest base station version installed through the peripheral port; the latest base station version is loaded.
S404: it is queried whether the remote version storage server has a latest version update.
S405: the latest version is compared with the local version, and the latest base station version is downloaded and loaded.
S406: the latest version replaces the local version and version backup is performed, the latest base station version is backed up and the old version is deleted.

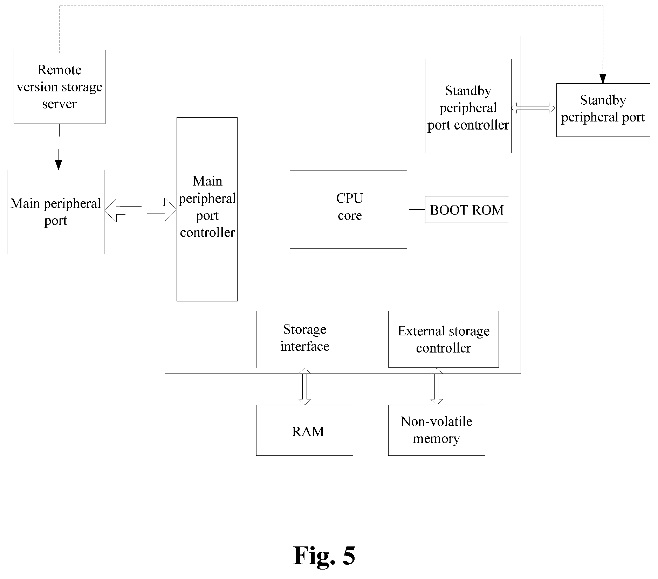

Fig. 5 is a diagram showing the structure of a device for remote base station version download and installation according to an embodiment of the present disclosure. As shown in Fig. 5, the device includes: a CPU core, a Boot ROM, an RAM, a non-volatile memory, main and standby peripheral ports (including but not limited to network port, Peripheral Component Interface Express (PCle), Wireless Fidelity (WIFI), Bluetooth and other wireless or wired ports), a remote version storage server.

The Boot ROM is the minimum code stored for the operation of the CPU minimal system after the CPU core is electrified. The RAM and the non-volatile memory are used for execution and storage of a corresponding CPU version. The peripheral port is divided into a main peripheral port and a standby peripheral port.

To sum up, the method for remote base station version installation according to the embodiments of the present disclosure can automatically download all board versions (Boot program and system programs need to be integrated) upon the board is first electrified during production stage, can implement automatic equipment start, and can realize remote automatic download of latest base station version during the subsequent production test and field usage. In an example implementation, the remote base station installation method specifically may include the following steps.
Step 1: after the base station equipment is electrified, the CPU on a board activates a related peripheral port by bootloading; then the peripheral port loads a driver and completes handshaking and connection according to a preset port and a preset server IP address.
Step 2: if the base station cannot complete Boot completely (first electrified or version is damaged), the base station directly downloads corresponding relevant information from a remote version storage server, completes loading and main/backup version setting.
Step 3: if the background of the base station system sends a version download command or the information of the base station version on the remote version storage server is updated, after automatic information comparison and detection, the base station automatically connects to the remote version storage server and compares and downloads the information, marks the main version information and the backup version information and completes the main/backup switchover, and loads the latest base station version after second electrified.

To sum up, the remote base station version installation scheme provided by the embodiments of the present disclosure has following effects.

This technical solution can complete version installation and backup automatically without manual intervention, facilitate fully automated production test at the manufactures and remote automatic upgrade of field maintenance, and greatly reduce equipment production and maintenance costs.

Although the above content gives a detailed description to the embodiments of the present disclosure, it should be noted that the present disclosure is not limited to this. Those skilled in the art can make various modifications to the present disclosure according to the principle of the embodiments of the present disclosure; therefore, all modifications made according to the principle of the embodiments of the present disclosure shall fall into the scope of protection defined by the claims of the present disclosure.

## Claims

1. A method for remote base station version installation, comprising:
activating, by a Central Processing Unit, CPU, of a base station, a CPU minimal system and a related peripheral port by loading a boot loader;
downloading a latest base station version from a remote version storage server connected to the related peripheral port activated;
loading the latest base station version downloaded and backing up the latest base station version downloaded to a system flash memory upon successful loading, by the CPU.

2. The method as claimed in claim 1, further comprising:
transmitting the latest base station version successfully loaded to a base station subjected to production test or a base station subjected to field upgrade;
downloading the latest base station version in the base station subjected to production test or the base station subjected to field upgrade, and marking information of the latest base station version downloaded as information of a main base station version.

3. The method as claimed in claim 2, further comprising:
during the production test of a base station version or the field upgrade of the base station version, querying version information from the remote version storage server and acquiring information of the latest base station version;
comparing the acquired information of the latest base station version with information of a local base station version;
when the information of the local base station version is different from the acquired information of the latest base station version, downloading the latest base station version and marking the information of the downloaded latest base station version as information of the main base station version, by the CPU.

4. The method as claimed in claim 3, wherein activating the related peripheral port comprises:
determining, by the activated CPU minimal system, a booting manner through a peripheral pin; selecting and activating, by the boot loader, the related peripheral port;
wherein the related peripheral port comprises a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

5. The method as claimed in claim 4, wherein downloading the latest base station version from the remote version storage server connected to the related peripheral port activated comprises:
acquiring, by the CPU, the latest base station version through the connection between the related peripheral port activated and the remote version storage server;
downloading, by the CPU, the acquired latest base station version.

6. A device for remote base station version installation, comprising:
an activation component, which is configured to enable a Central Processing Unit, CPU, of a base station to activate a CPU minimal system and a related peripheral port by loading a boot loader;
a download component, which is configured to download a latest base station version from a remote version storage server connected to the related peripheral port activated;
a load and a backup component, which is configured to enable the CPU to load the latest base station version downloaded and back up the latest base station version downloaded to a system flash memory upon successful loading.

7. The device as claimed in claim 6, further comprising:
a transmitting component, which is configured to transmit the latest base station version successfully loaded to a base station subjected to production test or a base station subjected to field upgrade;
a latest base station version acquisition component, which is configured to download the latest base station version in the base station subjected to production test or the base station subjected to field upgrade, and to mark information of the latest base station version downloaded as information of a main base station version.

8. The device as claimed in claim 7, further comprising:
a query component, which is configured to query version information from the remote version storage server and to acquire information of the latest base station version, during the production test of a base station version or the field upgrade of the base station version;
a comparison component, which is configured to compare the acquired information of the latest base station version with information of a local base station version;
a latest base station version acquisition component, which is configured to enable the CPU to download the latest base station version and mark the information of the downloaded latest base station version as information of a main base station version, when the information of the local base station version is different from the acquired information of the latest base station version.

9. The device as claimed in claim 6, wherein the activation component is configured to activate the related peripheral port in a following manner:
determining, by the activated CPU minimal system, a booting manner through a peripheral pin; selecting and activating, by the boot loader, the related peripheral port;
wherein the related peripheral port comprises a main peripheral port and a standby peripheral port; after the CPU minimal system is activated, when the main peripheral port connected with the remote version storage server to download the latest base station version is abnormal, the standby peripheral port is connected to the remote version storage server to download the latest base station version.

10. The device as claimed in claim 9, wherein the download component comprises:
a latest base station version information acquisition unit, which is configured to enable the CPU to acquire the latest base station version, through the connection between the related peripheral port activated and the remote version storage server;
a latest base station version information download unit, which is configured to enable the CPU to download the acquired latest base station version.
